# EUROPEAN PATENT APPLICATION

(11) **EP 1 970 219 A1**
(43) Date of publication of application: **17.09.2008**
(21) Application number: 07005493.7
(22) Date of filing: 16.03.2007
(51) Int. Cl.: B60B 1/00, B60B 5/02

(54) **Carbon fiber spoke for a bicycle wheel and method of manufacturing the same**

(71) Applicant: MEKKEM Industrial Inc., 429 Taichung (TW); FORTUNA ENTERPRISE srl, 40024 Castel S. Pietro Terme (IT)
(72) Inventor: Lin, John, Dr., 429 Taichung (TW); Fioravanti, Moreno, 40024 Castel S. Pietro Terme (IT)
(74) Representative: Kirschner, Klaus Dieter

(57) **Abstract**

A carbon fiber spoke for a bicycle wheel, comprises first and second metal end parts for attaching the spoke to a hub and a rim, respectively, of the bicycle wheel, and carbon fibers passing between the metal end part; each of the first and second metal end parts comprising an anchoring means for anchoring the carbon fibers to the metal end parts; the fibers being mutually molded together and to the metal end parts by means of a prepreg resin forming a shaft of the spoke between the two metal end parts, A method of manufacturing a carbon fiber spoke for a bicycle wheel comprises fixing the position of first and second metal end parts each having an anchoring means for carbon fibers to be anchored to the metal end parts,wrapping the carbon fibers in at least one bundle about the anchoring means of the metal end parts, providing a prepreg resin, and curing the carbon fibers and the prepreg resin.

## Description

The invention refers to a carbon fiber spoke for a bicycle wheel and a method of manufacturing the same.

From TW275970Y a carbon fiber spoke for a bicycle wheel is known comprising first and second metal end parts for attaching the spoke to a hub and a rim, respectively, of the bicycle wheel, and carbon fibers passing between the metal end parts. Each of the metal end parts has a hole or a hook for rapping the carbon fibers to the metal end parts. This design relies on stiffness of the carbon fibers as concerns the stability of the spoke prior to mounting it to the bicycle wheel. Furthermore, the anchoring of the carbon fibers to the metal end parts and the physical connection of the fibers to the metal end parts still poses a problem.

In view of the above, it is an object of the present invention to improve the carbon wire spoke to be rigid when manufactured and also to have a better connection between the carbon fibers and the metal end parts.

To achieve the above object, the invention provides a carbon fiber spoke for a bicycle wheel, wherein each of the first and second metal end parts comprising an anchoring means for anchoring the carbon fibers to the metal end parts; and wherein the fibers are mutually molded together and to the metal end parts by means of a prepreg resin, preferably by an epoxy resin or a bismalamide resin, form liner a shaft of the spoke between the two metal end parts and a reliable connection therewith. The molded body comprised by the prepreg resin provides a stiff carbon fiber spoke that can be handled and mounted easily during the manufacturing steps of the spoke and the mounting steps when mounting the spoke to the hub and the rim to form a bicycle wheel.

In a preferred embodiment of the invention, the anchoring means comprise one of at least one hole, at least one hook and a ball member. Any of these anchoring means maybe used with an advantage in the performance and tensile strength of the finished carbon fiber spoke.

In a preferred embodiment of the invention, the metal end part to be connected to the rim of the bicycle wheel, has two hooks positioned side by side or two holes positioned side by side. This arrangement is of advantage when a particular flat design of the carbon fiber portion of t the spoke is desired, as the carbon fiber are arranged side by side in the flat carbon fiber portion.

In a preferred embodiment of the invention, the metal end part to be connected to the rim of the bicycle wheel, has two holes disposed one above the other or two hooks positioned one above the other. This arrangement is of advantage when a round or almost round cross section of the carbon fiber portion of the spoke is desired, as the carbon fiber are arranged one on top of the other.

In a preferred embodiment of the invention, the prepreg resin has a cure temperature between 125°C and 180 °C, preferably the prepreg resin has a cure temperature of 150°C. Repreg resins having such a range of cure temperatures are advantageously adapted for the purpose of the present invention, in particular if such resins also provide or at least promote the chemical reaction between the fiber/resin/metal system to result in a strong attachment of the carbon fibers to the metal end parts.

In a preferred embodiment of the invention, the fibers extend, from a first metal end part about the anchoring means of the second metal end part and back to the first metal end part, and, in a second bundle of fibers, from the second metal end part about the anchoring means of the first metal end part and back to the second metal end part, and wherein the fibers of the two bundles are mutually molded together to be continuous in strength and to form a shaft of the spoke. By wrapping the fibers in bundles about the anchoring means in this way, the stability of the spoke is improved in particular because of the contribution of the prepreg resin to the formation of a composite spoke/resin/metal system and to the interconnection between the bundles.

In a preferred embodiment of the invention, the metal end parts each comprise two hole or two hooks, wherein first and second bundles of fibers extend from a first metal end part through one and the other, respectively, of the holes or hooks of the second metal end part and back to the first metal end part, and third and fourth bundles of fibers, from the second metal end part through one and the other, respectively, of the holes or hooks of the first metal end part and back to the second metal end part, and wherein the fibers of the four bundles are mutually molded together to be continuous in strength and to form a shaft of the spoke. By dividing the carbon fibers into several bundles, the intentional force in operation of the spoke is distributed to several bundles which are, because of the prepreg resin, fixedly connected to each other.

In a preferred embodiment of the invention, a layer of woven carbon fiber material is cured together with the bundles, is provided around the fiber bundles. The woven carbon fiber material that's to advantageous appearance of the spoke because of the design of the woven material. The woven carbon fiber material also protects the fibers inside the package which adds to the mechanic properties of the spoke during use.

A method of manufacturing a carbon fiber spoke for a bicycle wheel according to the invention comprises fixing the position of first and second metal end parts each having an anchoring means for carbon fibers to be anchored to the metal end parts, wrapping the carbon fibers in at least one bundle about the anchoring means of the metal end parts, providing a prepreg resin, curing the carbon fibers and the prepreg resin. This manufacturing method provides, in an advantageous way, a reliable carbon fiber spoke and a reliable connection between the carbon fibers and the metal end parts because of a chemical reaction taking place between the carbon fibers and the surface of the metal end parts which is promoted by the presence of the prepreg resin.

In a preferred embodiment of the method of the invention the curing is carried out in a moulding tool or in an autoclave which provides an easy production at low costs.

In a preferred embodiment of the method of the invention the fibers of a first bundle of fibers are wrapped from a first metal end part about the anchoring means of the second metal end part and back to the first metal end part, and wherein the fibers in a second bundle of fibers are wrapped from the second metal end part about the anchoring means of the first metal end part and back to the second metal end part. Wrapping the carbon fibers in a bundles in this way can easily be done by carrying out the method of the invention and does not add to further production costs various improving the performance of the finished spoke.

In a preferred embodiment of the method of the invention, additional fibers are wrapped, in the wrapping step, around the fibers extending between the metal end parts in a direction crossing the direction from one end part to the other end part. The wrapping of additional fibers in this way helps in keeping the fibers passing from one metal end part to the other together while preparing the carbon fiber/metal end part-combination prior to moulding the spoke.

In a preferred embodiment of the method of the invention, a layer of woven carbon fiber material provided around the fiber bundles, is cured together with the bundles. The woven carbon fiber material not only adds to the appearance of the spoke but also helps in keeping the fibers in place while assembling the fiber/metal end parts-system prior to moulding. Preferably, a prepreg material is also used for the woven carbon fiber material.

A preferred embodiment of the method of the invention further comprises applying a primer promoting the chemical reaction between the metal of the metal end parts and the carbon fibers, to the metal end parts before wrapping the fibers to the metal end parts. Providing the primer to promote the chemical reaction between the metal end parts and the carbon fibers adds to the strings of a connection between the metal and the carbon fibers which is basically also brought about by moulding the carbon fiber/prepreg resin/metal parts system.

In a preferred embodiment of the method of the invention, the curing step comprises gradually heating the carbon fibers and the prepreg material from room temperature to reach 150°C in 25 to 30 min, preferably in 30 min. Gradually heating the carbon fibers and the prepreg material in this way ensures a gentle curing of the material without producing cracks and other undesired defects in the spoke.

In a preferred embodiment of the method of the invention, the gradually heating from room temperature comprises heating the fibers in a linear function of time. This heating procedure can easily be carried out by a program for heating the moulding tool.

In a preferred embodiment of the method of the invention, the gradually heating of the carbon fibers from room temperature comprises heating the fibers to a first temperature, cooling the fibers to a second temperature lower then the first temperature, heating the fibers to a third temperature higher then the first temperature, cooling the fibers to a fourth temperature in between the first and second temperature, heating the fibers to a fifth temperature higher then the third temperature, and continuing the process until the final temperature is reached. It could be verified that the alternate heating and lowing of the temperature of the carbon fibers and the prepreg material is an even more gentle procedure to cure this system.

A preferred embodiment of the method of the invention further comprises trimming and polishing the spokes after curing. By trimming and polishing the spokes after curing, the final appearance of the spoke is improved.

In a preferred embodiment of the method of the invention, providing the prepreg comprises using pregreg carbon fibers before wrapping the fibers to the metal end parts. In principle, the prepreg material could be added separately prior to moulding the spoke. However, using prepreg carbon fibers and, optionally also a prepreg woven carbon fiber material, the manufacturing process is streamlined because there is no separate step for supplying the prepreg material, and the handling of the fibers is also improved during the manufacturing process of the spoke.

Embodiments of the invention are now described with reference to the drawings in which:
Fig. 1 shows the cutaway to end portions of a semi finished carbon fiber spoke;
Fig. 2 shows a first example of a metal end part having a hook, the metal end part being designed for the connection to the hub of the bicycle wheel;
Fig. 3 shows an alternative embodiment of a metal end part with a hole, the metal end part to be connected to the hub of the bicycle wheel;
Fig. 4 shows an alternative embodiment of the metal end part having two hooks, the metal end part to be connected to the hub of the bicycle wheel;
Fig. 5 shows an alternative embodiment of the metal end part having two holes, the metal end part to be connected to the hub of the bicycle wheel;
Fig. 6 shows an alternative embodiment of the metal end part having two holes disposed one above the other, the metal end part to be connected to the hub of the bicycle wheel;
Fig. 7 shows an alternative embodiment of a metal end part having two hooks positioned one above the other, the metal end part to be connected to the hub of the bicycle wheel; and
Fig. 8 shows an alternative embodiment of a metal end part having a full ball member, the metal end part to be connected to the hub of the bicycle wheel
Fig.9 shows an alternative embodiment of a metal end part having a ball member with a central opening, the metal end part to be connected to the hub of the bicycle wheel
Fig. 10 shows an exploded view of the carbon fiber portion of the spoke.

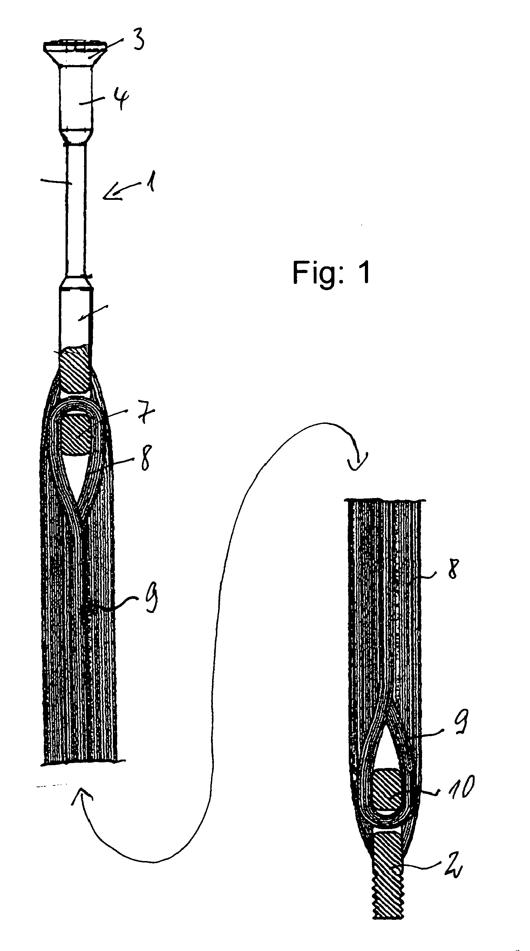

In Fig. 1, there is shown a first metal end part 1 and a second metal end part 2, where the first metal end part 1 is designed for attachment to the hub of a bicycle wheel and metal end part 2 is designed to be attached to a nipple which connects the spoke to the rim of the bicycle wheel. Metal end part 1 has a head 3, a first shank part 4, a flat shank part 5, another shank part 6 and a hook part 7.

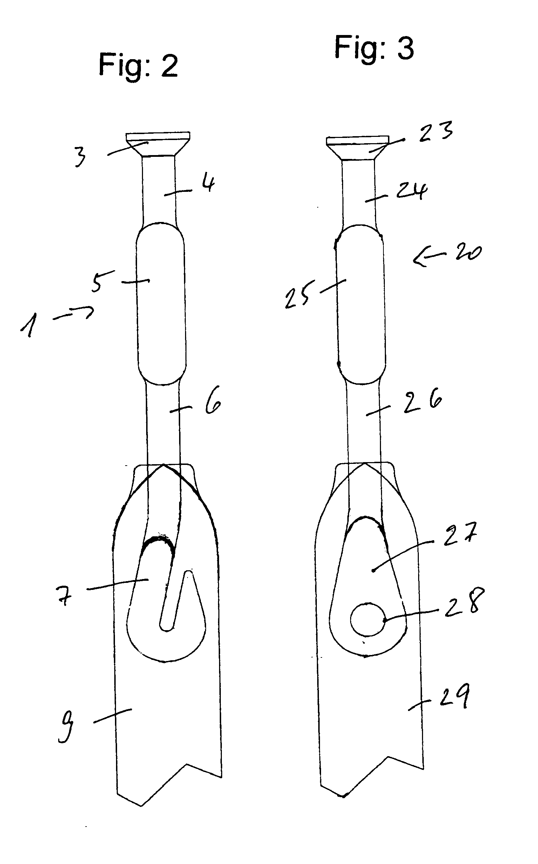

A first carbon fiber bundle 8 is wrapped through the hook portion 7, and a second bundle 9 is wrapped around a corresponding hook portion 10 on metal end part 2. It is to be noted that Fig. 1 shows a semi finished product, i.e. the components of the spoke prior to moulding and curing the same. After moulding and curing, the carbon fiber portion of the spoke is flattened in a direction perpendicular to the drawing plane of Fig. 1 as is also shown in Figs. 2 to 5.

Fig. 2 shows the metal end part 1 of Fig. 1 in more detail, in particular the relationship between the hook portion 7 and the carbon fiber bundle 9.

Fig. 3 is an alternative embodiment of the metal end part 20 having a head portion 23, a first shank portion 24, a flattened shank portion 25, another shank portion 26 and an anchoring portion 27 comprising a hole 28. One of the two fiber bundles 29 is shown, whereas the other fiber bundle that passes through the hole 28 is not shown. The wrapping system corresponds to the one shown in Fig. 1.

The embodiments of Figs. 1 to 3 show an embodiment of the invention where the fibers from a first metal end part pass about the anchoring means of the second metal end part and back to the first metal end part, and, in a second bundle of fibers, from the second metal end part around the anchoring means of the first metal end part and back to the second metal end part. It is to be noted that the metal end parts and the end parts to be connected to the rim of the bicycle wheel may have corresponding or alternate anchoring means to the hook portion 7 or the anchoring portion 27 with the hole 28.

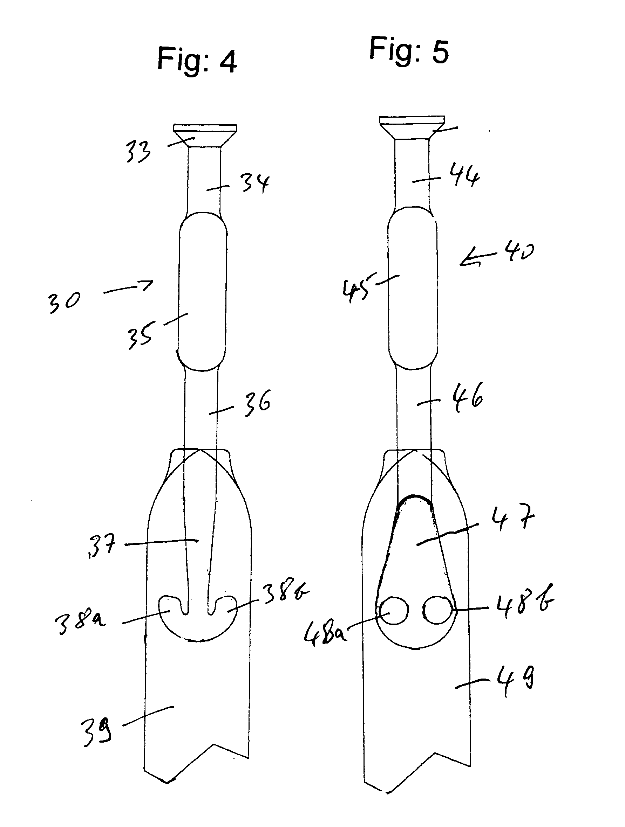

Fig. 4 shows an alternative embodiment of a metal end part 30 having a head portion 33, a first shank portion 34, a flattened shank portion 35, a second shank portion 36 and a double hook portion 37 comprising hooks 38a and 38b. The carbon fibers of fiber package are divided up into four bundles which are wrapped around the double hooks 38a, 38b of metal end part 30 and the corresponding hooks of the corresponding metal end part to be connected to the hub.

Fig. 5 shows an alternative embodiment of a metal end part 40 having a head portion 43, a first shank portion 44, a flattened shank portion 45, a second shank portion 46 and a double hook portion 47 comprising hooks 48a and 48b. The carbon fibers of fiber package are divided up into four bundles which are wrapped around the double hooks 48a, 48b of metal end part 40 and the corresponding hooks of the corresponding metal end part to be connected to the hub.

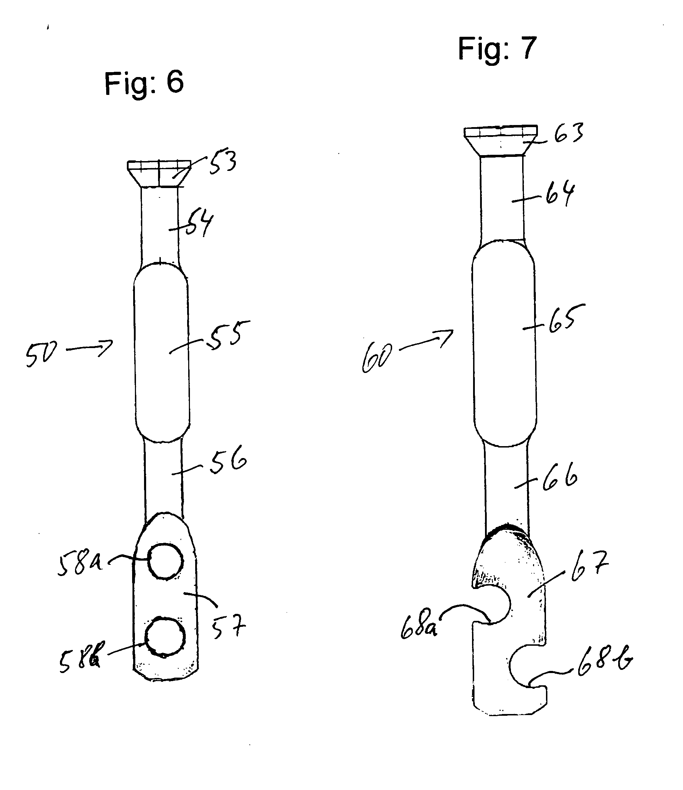

Fig. 6 shows an alternative embodiment of a metal end part 50 having a head portion 53, a first shank portion 54, a flattened shank portion 55, a second shank portion 56 and a double hook portion 57 comprising hooks 58a and 58b. The carbon fibers of fiber package are divided up into four bundles which are wrapped around the double hooks 58a, 58b of metal end part 50 and the corresponding hooks of the corresponding metal end part to be connected to the hub.

Fig. 7 shows an alternative embodiment of a metal end part 60 having a head portion 63, a first shank portion 64, a flattened shank portion 65, a second shank portion 66 and a double hook portion 67 comprising hooks 68a and 68b. The carbon fibers of fiber package are divided up into four bundles which are wrapped around the double hooks 68a, 68b of metal end part 60 and the corresponding hooks of the corresponding metal end part to be connected to the hub.

In the embodiments of Figures 4 to 7 the metal end parts each comprise two holes or two hooks, and first and second bundles of fibers extend from a first metal end part through one and the other, respectively of the holes or hooks of the second metal end part and back to first metal end part. Third and fourth bundles of fibers extend from the second metal end parts through one and the other respectively of the holes or hooks of the first metal end part and back to the second metal end part.

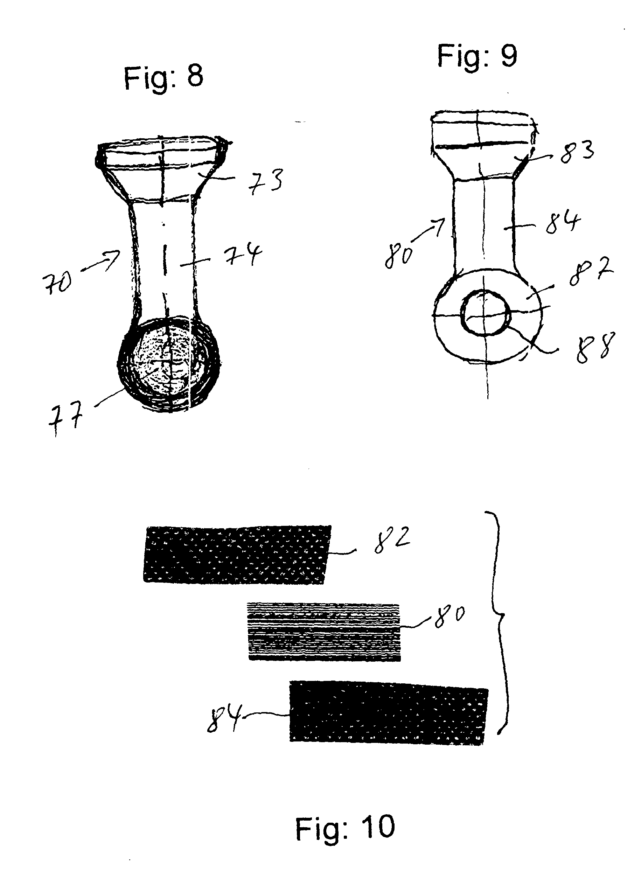

Fig. 8 shows an alternative embodiment of a metal end part 70 having a head portion 73, a shank portion 74, and a full ball member 77. Fig. 9 shows an alternative embodiment of a metal end part 80 having a head portion 83, at shank portion 84, and a ball member 87 comprising an opening 88. As in the previous embodiment, the ball members 77, 87 serve as anchoring means for the carbon fibers.

Fig. 10 shows an explosion view of a portion of the carbon fiber part of the spoke. The fibers 80 extending from one end portion to another end portion are covered by a layer 82 of woven carbon fiber material on top and also covered by another layer 84 of woven carbon fiber material. These layers are molded together to form a fiber portion of the spoke which is flat in the plane for example of Fig. 2. Also because of the finish of the carbon part of the spoke, the spoke has a very low resistance to an air flow parallel to the plane of the flattened carbon fiber portion of the spoke.

The man skilled in the art will understand that the selection of the specific fibers used for the spoke of the present invention depends on the tensile strength needed in the bicycle application. In such an application, stainless spokes show a tension strength of 380 kg, and a tensile strength of the carbon fiber spoke of 430 kg can easily be reached. Carbon fibers on the market show a tensile strength of 2060 MPA as compared to stainless steel (US 304) of 980 MPA and aluminum A5052 of 200 MPA. Therefore, by selecting the carbon fiber material and the appropriate number of fibers, the required tensile strength can be provided for sure.

Appropriate materials for the prepreg resin are for example the epoxy resin TENAX, product no. 144 and product no. 135 or TENAX bismalamide resin, product no. 332 of TOHO TENAX Co.,Ltd. Because of their self adhesive properties assisting in forming a strong connection between the carbon fibers and the metal parts of the carbon fiber spoke.

The invention has been described above with reference to bicycle wheels. However, it is apparent to the man skilled in the art that the invention can also be used for spokes for motor cycles and even for automobiles having spooked wheels. In all these applications, light weight and superior tensile strength of the carbon fiber spoke is of mature importance.

## Claims

1. Carbon fiber spoke for a bicycle wheel, comprising
first and second metal end parts for attaching the spoke to a hub and a rim, respectively, of the bicycle wheel, and carbon fibers passing between the metal end part;
each of the first and second metal end parts comprising an anchoring means for anchoring the carbon fibers to the metal end parts;
the fibers being mutually molded together and to the metal end parts by means of a prepreg resin, preferably by an epoxy resin or a bismalamide resin, forming a shaft of the spoke between the two metal end parts.

2. The spoke of claim 1, wherein the anchoring means comprise one of at least one hole or at least one hook and a ball member.

3. The spoke of claim 1, wherein the prepreg resin has a cure temperature between 125°C and 180 °C, preferably the prepreg resin has a cure temperature of 150°C.

4. The spoke of claim 1 or 2, wherein the fibers extend, in a first bundle of fibers, from a first metal end part about the anchoring means of the second metal end part and back to the first metal end part, and, in a second bundle of fibers, from the second metal end part about the anchoring means of the first metal end part and back to the second metal end part, and wherein the fibers of the two bundles are mutually molded together to be continuous in strength and to form a shaft of the spoke.

5. The spoke of claim 1, wherein the metal end parts each comprise two hole or two hooks, wherein first and second bundles of fibers extend from a first metal end part through one and the other, respectively, of the holes or hooks of the second metal end part and back to the first metal end part, and third and fourth bundles of fibers, from the second metal end part through one and the other, respectively, of the holes or hooks of the first metal end part and back to the second metal end part, and wherein the fibers of the four bundles are mutually molded together to be continuous in strength and to form a shaft of the spoke.

6. The spoke of any of the proceeding claims, wherein a layer of woven carbon fiber material cured together with the bundles, is provided around the fiber bundles.

7. Method of manufacturing a carbon fiber spoke for a bicycle wheel, comprising:
fixing the position of first and second metal end parts each having an anchoring means for carbon fibers to be anchored to the metal end parts,
wrapping the carbon fibers in at least one bundle about the anchoring means of the metal end parts,
providing a prepreg resin, and
curing the carbon fibers and the prepreg resin.

8. The method of claim 7, wherein the curing is carried out in a moulding tool or in an autoclave.

9. The method of claim 7, wherein the fibers of a first bundle of fibers are wrapped from a first metal end part about the anchoring means of the second metal end part and back to the first metal end part, and wherein the fibers in a second bundle of fibers are wrapped from the second metal end part about the anchoring means of the first metal end part and back to the second metal end part.

10. The method of claim 7 or 8, wherein additional fibers are wrapped in the wrapping step, around the fibers extending between the metal end parts in a direction crossing the direction from one end part to the other end part.

11. The method of any of the claims 7 to 9, wherein a layer of woven carbon fiber material provided around the fiber bundles, is cured together with the bundles.

12. The method of claim 7, further comprising applying a primer promoting the chemical reaction between the metal of the metal end parts and the carbon fibers, to the metal end parts before wrapping the fibers to the metal end parts.

13. The method of claim 7, the curing step comprises gradually heating the carbon fibers and the prepreg material from room temperature to reach 150°C in 25 to 30 min, preferably in 30 min.

14. The method of claim 13, wherein the gradually heating from room temperature comprises heating the fibers in a linear function of time.

15. The method of claim 13, wherein the gradually heating of the carbon fibers from room temperature comprises
heating the fibers to a first temperature ,
cooling the fibers to a second temperature lower then the first temperature,
heating the fibers to a third temperature higher then the first temperature,
cooling the fibers to a fourth temperature in between the first and second temperature,
heating the fibers to a fifth temperature higher then the third temperature, and
continuing the process until the final temperature is reached.

16. The method of claim 7, further comprising trimming and polishing the spokes after curing.

17. The method of claim 7, wherein providing the prepreg comprises using the pregreg carbon fibers.
